(19) Europäisches Patentamt / European Patent Office / Office européen des brevets

(11) **EP 3 538 901 B1**

(12) **EUROPEAN PATENT SPECIFICATION**

(45) Date of publication and mention
of the grant of the patent:
**06.01.2021 Bulletin 2021/01**

(21) Application number: **16791607.1**

(22) Date of filing: **08.11.2016**

(51) Int Cl.:
**G01P 5/08** *(2006.01)*     **G01F 1/58** *(2006.01)*

(86) International application number:
**PCT/EP2016/076967**

(87) International publication number:
**WO 2018/086675 (17.05.2018 Gazette 2018/20)**

(54) **METHOD AND SYSTEM FOR CALIBRATION-FREE DETERMINATION OF A FLOW VELOCITY OF AN ELECTRICALLY CONDUCTIVE FLUID**

VERFAHREN UND SYSTEM ZUR KALIBRIERUNGSFREIEN BESTIMMUNG EINER STRÖMUNGSGESCHWINDIGKEIT EINER ELEKTRISCH LEITENDEN FLÜSSIGKEIT

PROCÉDÉ ET SYSTÈME DE DÉTERMINATION SANS ÉTALONNAGE DE VITESSE D'ÉCOULEMENT DE FLUIDE ÉLECTROCONDUCTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.09.2019 Bulletin 2019/38**

(73) Proprietors:
• **Helmholtz-Zentrum Dresden - Rossendorf e.V.**
  **01328 Dresden (DE)**
• **Commissariat à l'Énergie Atomique**
  **et aux Énergies Alternatives**
  **75015 Paris (FR)**

(72) Inventors:
• **KRAUTER, Nico**
  **01324 Dresden (DE)**
• **STEFANI, Frank**
  **01099 Dresden (DE)**
• **ECKERT, Sven**
  **01259 Dresden (DE)**
• **GERBETH, Gunter**
  **01328 Dresden (DE)**

(74) Representative: **Pfenning, Meinig & Partner mbB**
  **Patent- und Rechtsanwälte**
  **An der Frauenkirche 20**
  **01067 Dresden (DE)**

(56) References cited:
**US-A- 3 595 076**

• **J FORBRIGER ET AL: "Transient eddy current flow metering", MEASUREMENT SCIENCE AND TECHNOLOGY., vol. 26, no. 10, 18 September 2015 (2015-09-18), page 105303, XP055326203, GB ISSN: 0957-0233, DOI: 10.1088/0957-0233/26/10/105303 cited in the application**
• **DATABASE WPI Week 197738 Thomson Scientific, London, GB; AN 1977-H8467Y XP002764987, & SU 532 762 A (AS LATV PHYS MAGNET) 22 February 1977 (1977-02-22)**

**Description**

The present invention relates to a method and a system for calibration-free determination of a flow velocity of an electrically conductive fluid.

Determining flow velocities of molten metals and semiconductor melts is quite important for many processes in metallurgy and crystal growing. Furthermore, a precise and reliable determination of flow velocities is of upmost importance in liquid metal fast breeder reactors in view of safety requirements. Conventionally applied techniques like Laser Doppler Anemometry (LDA) or Particle Image Velocimetry (PIV) cannot be applied in such cases due to the non-transparent fluid under investigation.

For this reason, methods based on flow-induced electrical voltages are applied which use electrodes in contact with the fluid or which use flow-induced magnetic fields or parameters derived therefrom (e. g. forces acting on permanent magnets). For such a contactless inductive determination of flow velocities, several methods are known. WO 00/58695 A1 discloses a method for determining several parameters of a metal bed, including a velocity of flow. The method is based on flow-induced electrical eddy currents which are created under influence of an externally applied magnetic field. The flow velocity, however, cannot be measured directly and without a calibration step since the sensed force is proportional to the electrical conductivity of the fluid under investigation.

Any methods employing permanent magnets show the disadvantage that their use is restricted to ambient temperatures not exceeding 200 °C. In consequence, such methods cannot be employed for liquid silicon in crystal growing methods according to Czochralski or liquid metal fast breeder reactors.

EP 1 285 277 B1 shows a method and a system for determining the spatial speed distributions in electrically conductive fluids based on flow induced magnetic fields measured by several magnetic field sensors uniformly surrounding the measurement volume. The experimental verification of the method was described in Stefani, F. and Gerbeth, G.: "Contactless inductive flow tomography", Physical Review E 70 (2004), 056306. Although the method is capable of determining information on the global structure of flow, local velocities cannot be determined precisely.

Another method is described in document US 24 35 043 A, wherein an inductively working flow sensor is placed in the fluid for measuring local velocities. Three coaxially oriented coils are oriented in the direction of the flow component to be measured and oppositely oriented alternating currents are provided at the outer two coils so that (in case of the fluid being at rest) the magnetic fields created by the coils cancel each other out in the centre region between the coils. After calibrating the middle coil, the electrical voltage measured by this coil can be regarded as proportional to the flow velocity of the liquid.

The publication Forbiger, J. and Stefani, F.: "Transient eddy current flow metering", Measurement Science and Technology 26 (2015), Art.-No. 105303 deals with a method, in which a field coil with windings oriented in parallel to a nearest area of liquid is provided with a pulsed electric current. The movement of the dissipatively decaying eddy current in the melt is sensed by two smaller receiver coils placed inside the larger field coil. The detected electrical voltages induced in the receiver coils are used for determining the position of the eddy current which is transported along with the flow and the flow velocity is calculated by the time derivative. Such a setup, however, can only be used for determining the flow velocity in proximity of a wall.

The present invention is therefore based on the object of providing a method as well as a system overcoming the outlined problems, i. e. which are capable of determining without any calibration the flow velocity precisely at arbitrary positions in the fluid and to provide a system which is capable to work at temperatures exceeding 200 °C.

This object is achieved according to the invention by a method as claimed in claim 1 and a system as claimed in claim 11. Advantageous developments and embodiments are described in the dependent claims.

In a method for calibration-free determination of a flow velocity of an electrically conductive fluid, each of two field coils, which are positioned at a distance from each other in the respective fluid and to be electrically insulated from the respective fluid, is provided simultaneously with a pulsed electrical current (i. e. pulsed electric currents are passed through the coils), wherein the two pulsed electrical currents are oppositely directed, so that a primary magnetic field is created by the two field coils. This primary magnetic field leads to oppositely directed eddy currents in the surrounding fluid, which are induced by the primary magnetic field and thereby create a secondary magnetic field in the respective fluid. The secondary magnetic field is measured by two magnetic field sensors after the pulsed electrical currents, i. e. after the field coils are no longer provided with electrical current. The two magnetic field sensors are positioned at a distance from each other in the respective fluid and electrically insulated from the respective fluid and the flow velocity is calculated from a measured time-dependent strength of the secondary magnetic field and/or its time derivative.

By placing field coils in the respective fluid, the secondary magnetic field can be determined quite easily and with high precision. Due to the fact that two magnetic field sensors are used for measuring the field strength of the secondary magnetic field, wherein these magnetic field sensors are electrically insulted from each other, typically electrically insulated from the fluid as well and positioned at a distance from each other in the respective fluid, this field strength can be investigated without the need for performing any calibration. The oppositely directed currents applied to the field coils (i. e. the field coils are connected so that their magnetic effects oppose each other) result in a corresponding magnetic field with a zero crossing of the field somewhere between the field coils so that the temporal evolution of the position of this zero crossing can be spotted pretty easily because the fluid tends to drag the magnetic field along with it. In consequence, the field displacement is proportional to the fluid speed. By applying pulsed electrical currents, i. e. applying the electrical current only for a predetermined period of time with sharp rise and fall times, and measuring the secondary magnetic field after the pulse is terminated, it is possible to reliably determine the flow velocity due to the magnetic effects induced by the pulse. By using field coils, which are positioned at a distance from each other and electrically insulated from each other and the fluid under investigation, it allows to create the magnetic field in a reliable and reproducible manner. The expression "designed to be" in this regard identifies a feature of an entity which might be described by the wording "adapted to be" or "configured to be" as well

Typically, the two magnetic field sensors are positioned between the two field coils for improving a robustness of the result. However, it is likewise possible to place the magnetic field sensors at other positions as well.

Furthermore, the magnetic field sensors can be positioned symmetrically between the two field coils in order to get a measurement setup which can be configured in a simple way.

Preferably, at least one of the magnetic field sensors is formed as a Hall sensor, as a flux gate sensor, or as a receiver coil. More preferably, both of the magnetic field sensors are set up identically, i. e. both magnetic field sensors can be realized as Hall sensors, as flux gate sensors or as receiver coil. Typically, the magnetic field sensors are formed as receiver coils and the secondary magnetic field is determined by an integration of the time derivation (or the time derivative, respectively) calculated from the electrical voltage induced in said receiver coils. Alternatively, the velocity can be calculated directly by the voltages induced in the receiver coils, depending on the desired accuracy and available devices for carrying out the method.

A distance vector between centre points of the two field coils can be oriented at an angle to a direction of flow of the respective fluid which is different from 90°, i. e. essentially parallel to the direction of flow. In particular, "essentially parallel" is meant to cover the range of 0° to 20° of angles between the direction of flow and said distance vector. With such a coaxial arrangement of the field coils in the fluid, the measurement setup is simplified.

The two magnetic field sensors are typically oriented in such a way that a distance vector between their centre points is parallel to the distance vector between the centre points of the field coils which also helps simplifying the measurement setup.

Preferably, the centre points of the two field coils and the centre points of the two magnetic field sensors are positioned along a single straight line, i. e. the direction of the distance vectors of the field coils and of the magnetic field sensors are identical in order to support the precise determination of the field strength of the secondary magnetic field. This results in a coaxial arrangement of the two field coils and the two magnetic field sensors. In case that the two magnetic field sensors are realized as receiver coils, the arrangement typically comprises four coaxially arranged coils.

The pulsed electrical currents can be alternating current pulses or direct current pulses. Preferably, the two pulsed electrical currents have an identical amplitude in order to simplify the measurement.

The respective electrically conductive fluid can comprise molten metal or semiconductor melt. Typically, the method is applied in sodium-cooled fast breeder reactors or steel strand casting facilities.

A system for calibration-free determination of a flow velocity of an electrically conductive fluid comprises two field coils, which are positioned at a distance from each other in the respective fluid and electrically insulated from the respective fluid, wherein each of the two field coils is constructed in such a way that after a simultaneous application of a pulsed electrical current to each of the two field coils by a control unit, wherein the two pulsed electrical currents are oppositely directed, a primary magnetic field is created leading to oppositely directed eddy currents, which are induced by the primary magnetic field in the surrounding fluid. The eddy currents create a secondary magnetic field in the respective fluid and two magnetic field sensors, which are positioned at a distance from each other in the respective fluid and electrically insulated from the respective fluid, are capable of measuring the secondary magnetic field. An evaluation unit is capable of calculating the flow velocity from a measured time-dependent strength of the secondary magnetic field and/or its time derivative.

Such a system with two field coils, two magnetic field sensors and an evaluation unit which is capable of determining the flow velocity provides a simple measurement setup which allows for a time-saving measurement by taking into account the time-dependent status of the secondary magnetic field, i. e. in particular, the magnetic field strength and/or its time derivative, respectively.

The two field coils and/or the two magnetic field sensors are preferably positioned inside a cladding. The cladding is typically placed in the respective fluid in order to protect the field coils and the magnetic field sensors from direct contact with the fluid. The cladding (which can also be referred to as a casing) can have a shape adapted to the flow direction, i. e. in particular an aerodynamically optimized shape in order to provide only a low flow resistance to the fluid.

Preferably, the system is provided with an output unit for displaying the determined flow velocity.

Each of the field coils can have an identical number of windings. Preferably, the magnetic field sensors are receiver coils and, more preferably, each of the receiver coils has an identical number of windings. Typically, the field coils and/or the receiver coils acting as the magnetic field sensors are identical circular magnetic coils (also known as "solenoids") that are placed symmetrically along a common axis, one on each side of the experimental area where the zero crossing is to be created, and separated by a distance equal to the radius of the respective coil, resulting in a clearly defined magnetic field. However, it may also be possible that the number of windings is different for a pair of coils and/or different material is used for the windings.

It is preferred that the field coils create magnetic fields of identical amplitude which are oppositely directed. This can be achieved by field coils with identical number of windings and an identical amplitude of the applied current pulses. It is as well possible to use field coils with different number of windings and correspondingly modified amplitudes of the electrical current pulses in order to achieve the same magnetic field strength at each of the field coils.

Typically, the number of windings of the two magnetic field sensors, which are realized by receiver coils, is larger than the number of windings of the two field coils.

With this system, a method with the features already described can be executed, i. e. the described method is executable with the described system. Furthermore, a corresponding measurement arrangement as described above can be realized, i. e. in particular two field coils and two receiver coils can form a coaxial measurement setup.

Exemplary embodiments of the invention are illustrated in the drawings and will be explained below with reference to figures 1 to 6. In the figures:

Fig. 1    shows a schematic side view of a measurement system for calibration-free determination of a flow velocity;

Fig. 2    shows a diagram of a time derivative of a magnetic field between field coils;

Fig. 3    shows an enlarged view of the centre area of the diagram depicted in Figure 2;

Fig. 4    shows a diagram with a temporal evolution of the time derivative of the magnetic field created by the field coils;

Fig. 5    shows a diagram of the position of the zero crossing of the magnetic field's time derivative in its temporal evolution and

Fig. 6    shows a diagram for determining the flow velocity from measured values of the zero crossing.

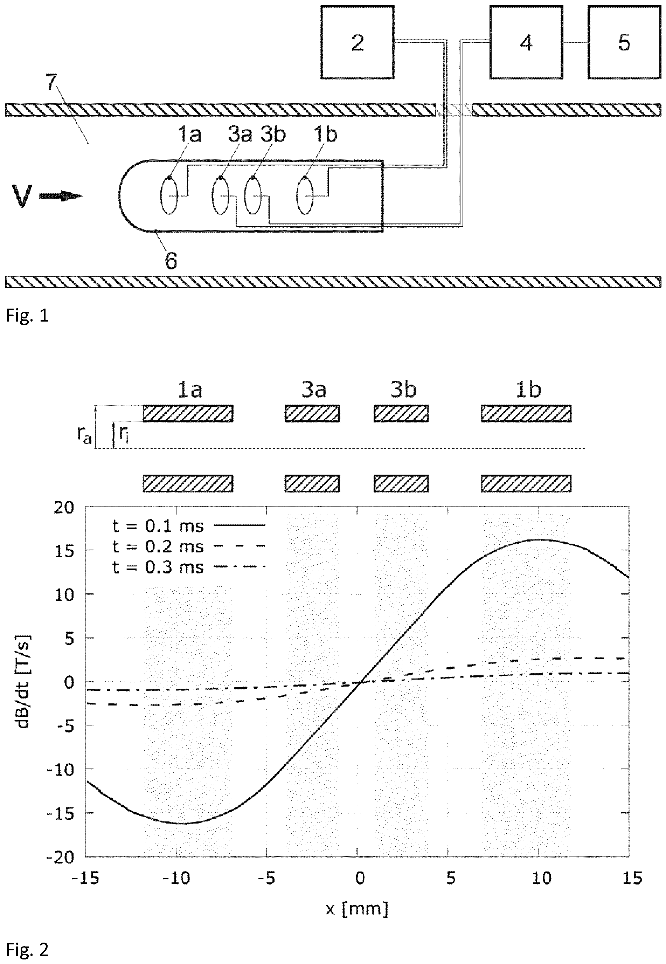

Figure 1 shows a schematic side view of a measurement system for calibration-free determination of a flow velocity of an electrically conductive fluid 7 (which is molten metal in the presented embodiment but may as well be semiconductor melt or sodium melt in further embodiments). Two field coils 1a and 1b for creating a primary magnetic field in the fluid 7 are controlled by a control unit 2. The two field coils 1a and 1b have an identical radius, identical number of windings and are made of the same material. They are placed inside a cladding tube 6 at a distance to each other. The cladding tube 6 is submerged in the fluid 7. The cladding tube 6 has a front side facing the flow of the fluid 7 and this front side is curved in order to reduce flow resistance of the approaching flow of the fluid 7. A rear end of the cladding tube 6 is not optimized in this regard but designed as a flat surface. Since the field coils 1a and 1b are placed in the cladding tube, they are electrically insulated from the fluid 7 and electrically insulated from each other.

The field coils 1a and 1b are aligned so that a distance vector between their centre points is in the direction of the fluid flow. The magnetic field created by these field coils 1a and 1b is axially directed along this distance vector. The control unit 2, which can be realised by a conventional computer, applies pulsed electrical currents to the field coils 1a and 1b, thereby creating the primary magnetic field. In the embodiment shown in Fig. 1, the pulse width is 0.5 ms. In further embodiments, the pulse width can be within the range of 0.2 ms-2 ms. This primary magnetic field leads to electrical eddy currents in the surrounding fluid 7 and a secondary magnetic field, which, after the end of the current pulse, can be measured by two magnetic field sensors 3a and 3b. The pulsed electrical currents are oppositely directed in the shown embodiment but have an identical amplitude, thereby creating oppositely directed magnetic effects.

The magnetic field sensors 3a and 3b are receiver coils in the embodiment shown in Figure 1 but may be realized as Hall sensors or flux gate sensors in further embodiments. These magnetic field sensors 3a and 3b are positioned at a distance from each other between the field coils 1a and 1b in the exemplary setup of Figure 1. In particular, the magnetic field sensors 3a and 3b are placed symmetrically between the field coils 1a and 1b. A distance between each of the coils and its neighbouring coil, i. e. the field coils 1a and 1b as well as the receiver coils, can be the same. In further embodiments, the alignment of all coils can also be mirror-symmetrical, i. e. the distance between the left receiver coil and the left field coil 1a is identical to the distance between the right receiver coil and the right field coil 1b whereas the distance between the respective receiver coils may be different. Centre points of the field coils 1a and 1b and centre points of the magnetic field sensors 3a and 3b are aligned along a single straight line (which is also oriented in the direction of flow of the liquid 7) in the shown embodiment.

The cladding tube 6 is typically made of stainless steel or any other temperature-resistant and non-ferromagnetic material, which does not react with the electrically conductive fluid 7. The two field coils 1a and 1b as well as the magnetic field sensors 3a and 3b are plugged into the cladding tube 6 and can easily be replaced in case of fault. The magnetic field sensors 3a and 3b are as well electrically insulated from each other (i. e. in particular not in any direct electrical contact) and electrically insulated from the respective fluid. In particular, the magnetic field sensors 3a and 3b are designed in such a way that they are just fitting into the cladding tube 6 and a margin for mechanical movement is only little or not present at all. In further embodiments, the two field coils 1a and 1b and/or the two magnetic field sensors 3a and 3b can be embedded in temperature-resistant adhesive or resin. Preferably, ceramic adhesive is used for this purpose. Of course, the thicker a wall thickness of the cladding tube, the poorer is a signal and/or a sensitivity of the magnetic field sensors 3a and 3b. In further embodiments, each of the magnetic field coils 1a and 1b and of the magnetic field sensors 3a and 3b can have its own casing in order to ensure a corresponding electrical insulation.

Any coil body used in this measurement system may be made of temperature-resistant material which only shows a small coefficient of thermal expansion. Typically, the coil body is made of a non-ferromagnetic material.

The design of the coil bodies can advantageously be directed towards an electrical conductivity which is kept as small as possible in order to reduce any eddy current losses in the coil bodies. For example, the coil body can comprise a ceramic known as MACOR®. This material itself is not ferromagnetic but shows a high temperature resistance, small electrical conductivity, a small coefficient of thermal expansion and can be handled quite easily.

In the discussed embodiment, an upper side of each coil body shows a transition passage from a thinner coil wire to a thicker stranded wire. This transition passage serves the purpose of conveying electrical signals for further evaluation and to pull the coils out of the cladding tube 6. In order to avoid mechanical stress at the thin and sensitive coil wires, a specific construction for strain relief may be applied on the upper part of the coil body. A thicker stranded wire shows the advantage of a smaller electrical resistance. Due to small coil voltages, an electrical insulation of this stranded wire does not need to be bulky but needs to be designed to withstand comparatively high ambient temperatures of up to 2000 °C. A transition to conventional electrical connections, e. g., alligator clips, soldered connections or plugs, respectively, may be provided at an end portion of the cladding tube 6.

Since the control unit 2 provides oppositely directed electric current pulses of identical magnitude and the field coils 1a and 1b have an identical setup, a zero crossing of the magnetic field strength in the middle between the field coils 1a and 1b is created. Due to the flow of the fluid the position of this zero crossing changes with time due to the material transport by the fluid and can be detected by the magnetic field sensors 3a and 3b. A corresponding signal for further evaluation is sent to an evaluation unit 4 which carries out further processing and presents a result, i. e. the detected flow velocity, on an output unit 5. The output unit 5 in the embodiment shown in Figure 1 is a computer display and the evaluation unit 4, which is also capable of storing data, may be realized by a computer. It is likewise possible to combine the control unit 2 and the evaluation unit 4 in one device. The pulses of the electric currents can be repeated periodically in order to achieve a continuously measuring setup or method, respectively. The pulses can be direct current pulses or alternating current pulses.

In Figure 2, a diagram is presented showing the numerically simulated dependency of a time derivative of the axial magnetic field component along a centre line of the field coils 1a and 1b and the magnetic field sensors 3a and 3b. Recurring features are provided in this figure and in the following figures in each case with identical reference signs. The specific measurement geometry used for the simulation is shown in the upper part of Figure 2. The primary magnetic field is created by the field coils 1a and 1b, each of them having an inner radius of $r_i=3.4$ mm and an outer radius of $r_a=5.4$ mm as well as 100 windings of a metal wire with a diameter of 0.25 mm. In the numerical simulation carried out, oppositely directed electrical currents of +/-1.94 A have been passed through the field coils 1a and 1b and switched off at time $t_0$ with a fall time of 0.2 ms. Circular electrical eddy current are induced in the fluid volume by these current pulses and the resulting secondary magnetic field is measured by the receiver coils which are employed as magnetic field sensors 3a and 3b in the embodiment at hand. In the specific situation shown in this embodiment, the receiver coils used as the magnetic field sensors 3a and 3b show an output voltage which depends on the time derivative of the magnetic field rather than on the magnetic field itself.

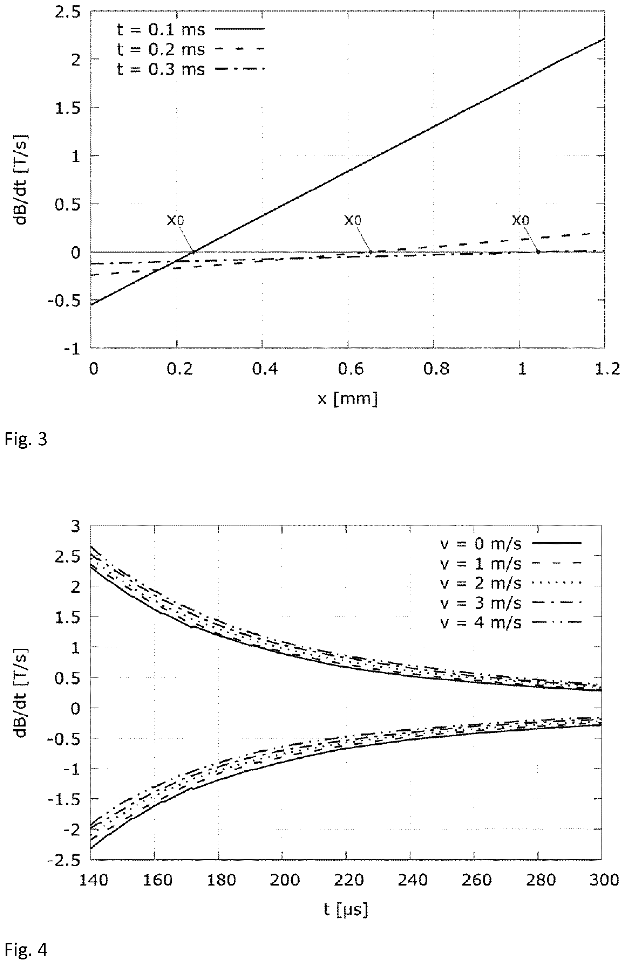

The receiver coils show the same inner radius and the same outer radius as the field coils 1a and 1b, but, contrary to these coils, have 120 windings of a metal wire with a diameter of 0.15 mm. The different lines depicted in Figure 2 show the simulation result for three different times t=0.1 ms, t=0.2 ms and t=0.3 ms for a supposed fluid velocity of v=4 m/s. In this simulation, eutectic alloy GaInSn with an electrical conductivity of $3.3 \times 10^6$ S/m has been used. Figure 3 shows an enlarged view of the centre area of Figure 2 in order to exemplify the dependence of the time derivative on the axial coordinate x. As can be seen, the zero crossing can be found at different positions with increasing time and from the change in the positions and the distance travelled, the fluid velocity can be reasoned.

A more detailed time dependence of the time derivative of the magnetic field for five different fluid velocities (as can be expected according to the simulation at the centre points of the receiver coils) is shown in Figure 4. While at a velocity v=0 m/s the time derivative of the magnetic field is mirror-symmetrical, this symmetry is broken for increasing velocities. As long as the spatial course of the simulated time derivative of the magnetic field between the receiver coils can be assumed to be linear, the position of the spatial zero crossing $x_0$ at a time t can be interpolated by way of the following formula:

$$x_0(t)=(x_1 \cdot dB_2(t)/dt - x_2 \cdot B_1(t)/dt)/(dB_2(t)/dt-dB_1(t)/dt),$$

wherein $x_1$ and $x_2$ are the positions of the centre points of the magnetic field sensors 3a and 3b and $dB_1(t)/dt$ and $dB_2(t)/dt$ the calculated respective time derivatives of the magnetic fields at these positions.

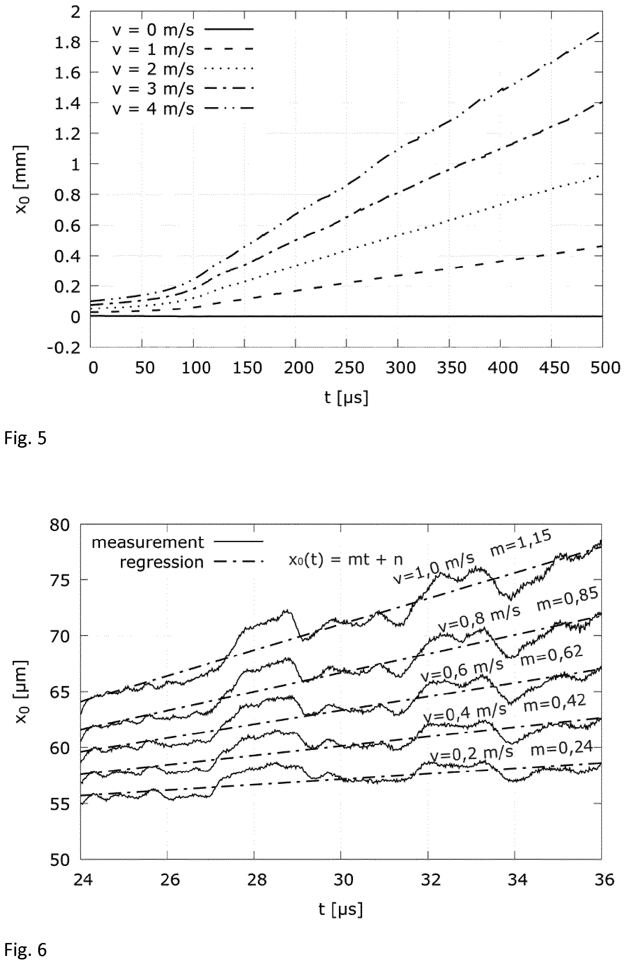

Figure 5 represents a temporal course $x_0(t)$ of the spatial zero crossing of Figure 1 for time derivatives of the axial magnetic field component, again for five different velocities. While the bending of the shown curves at the beginning is due to a finite fall time of the switching-off-procedure, starting from around t=0.1 ms a linear rise of $x_0$ over time is found. This linear rise allows in a simple manner to calculate the velocity of the zero crossing and the corresponding fluid velocity v by $v=dx_0(t)/dt$.

Alternatively to directly using the measured time derivatives in said formula, the magnetic fields $B_1$ and $B_2$ can be gained via temporal integration and the velocity of the zero crossing of the magnetic field is determined directly from the respective time dependence of the magnetic fields.

In reality, a measurement in a fluid tube can be carried out as described and leads to the measurement results represented in Figure 6. In contrast to the numerical simulation, a current of 0.2 A and a fall time of 0.02 ms in the field coils 1a and 1b is used. Figure 6 shows for five different velocities between 0.2 m/s and 1.0 m/s the temporal evolution, each of which is approximated by a regression line $x_0(t)=mt+n$. Although disturbances can be spotted in the diagram (which are probably due to a ringing of the electrical power supply of the field coils 1a and 1b after abruptly switching off this power supply), the values of slope m and the independently measured fluid velocities are found to be in pretty good correlation.

Features of the different embodiments which are merely disclosed in the exemplary embodiments can of course be combined with one another and also be claimed individually.

## Claims

1. Method for calibration-free determination of a flow velocity of an electrically conductive fluid (7), wherein
   each of two field coils (1a, 1b), which are positioned at a distance from each other in the respective fluid (7) and electrically insulated from the respective fluid (7), is provided simultaneously with a pulsed electrical current by a control unit (2), wherein the two pulsed electrical currents are oppositely directed, so that
   a primary magnetic field is created leading to oppositely directed eddy currents induced by the primary magnetic field in the surrounding fluid (7), thereby creating a secondary magnetic field with a zero-crossing in the respective fluid (7), wherein
   the secondary magnetic field is measured after the pulsed electrical currents by two magnetic field sensors (3a, 3b), which are positioned at a distance from each other in the respective fluid (7) and electrically insulated from the respective fluid (7), wherein
   the flow velocity is calculated from a measured time-dependent strength of the secondary magnetic field and/or its time derivative by detecting a temporal evolution of a position of the zero-crossing which is proportional to a fluid speed.

2. Method according to claim 1, **characterized in that** the two magnetic field sensors (3a, 3b) are positioned between the two field coils (1a, 1b).

3. Method according to claim 2, **characterized in that** the magnetic field sensors (3a, 3b) are positioned symmetrically between the two field coils (1a, 1b).

4. Method according to any of the preceding claims, **characterized in that** at least one of the magnetic field sensors (3a, 3b) is formed as a Hall sensor, as a flux gate sensor, or as a receiver coil.

5. Method according to any of the preceding claims, **characterized in that** the magnetic field sensors (3a, 3b) are formed as receiver coils and the secondary magnetic field is determined by an integration of the time derivation calculated from the electrical voltage induced in said receiver coils.

6. Method according to any of the preceding claims, **characterized in that** a distance vector between centre points of the two field coils (1a, 1b) is oriented at an angle to a direction of flow of the respective fluid (7) which is different from 90°.

7. Method according to any of the preceding claims, **characterized in that** the two magnetic field sensors (3a, 3b) are oriented so that a distance vector between their centre points is parallel to the distance vector between the centre points of the field coils (1a, 1b).

8. Method according to any of the preceding claims, **characterized in that** the centre points of the two field coils (1a, 1b) and of the two magnetic field sensors (3a, 3b) are positioned along a single straight line.

9. Method according to any of the preceding claims, **characterized in that** the two pulsed electrical currents have an identical amplitude.

10. Method according to any of the preceding claims, **characterized in that** the fluid (7) comprises molten metal or semiconductor melt.

11. System for calibration-free determination of a flow velocity of an electrically conductive fluid (7) with two field coils (1a, 1b), a cladding (6), two field sensors (3a, 3b), a control unit (2), and an evaluation unit (4),
**characterized in that**
each of the two field coils (1a, 1b), which are positioned at a distance from each other inside the cladding (6) in the respective fluid (7) and electrically insulated from the respective fluid (7) by the cladding (6), is constructed in such a way that after a pulsed electrical current is applied simultaneously to each of the two field coils (1a, 1b) by the control unit (2), wherein the two pulsed electrical currents are oppositely directed,
a primary magnetic field is created leading to oppositely directed eddy currents induced by the primary magnetic field in the surrounding fluid (7), thereby creating a secondary magnetic field with a zero crossing in the respective fluid (7), wherein
the two magnetic field sensors (3a, 3b), which are positioned at a distance from each other inside the cladding (6) in the respective fluid (7) and electrically insulated from the respective fluid (7) by the cladding (6), are configured to measure the secondary magnetic field, and an evaluation unit (4) is configured to calculate the flow velocity from a measured time-dependent strength of the secondary magnetic field and/or its time derivative by detecting a temporal evolution of a position of the zero-crossing which is proportional to a fluid speed.

12. System according to claim 11, **characterized in that** an output unit (5) for displaying the determined flow velocity is present.

13. System according to any of claims 11-12, **characterized in that** each of the field coils (1a, 1b) has an identical number of windings.

14. System according to any of claims 11-13, **characterized in that** the magnetic field sensors (3a, 3b) are receiver coils, wherein each of the receiver coils has an identical number of windings.

15. System according to claim 13, **characterized in that** a number of windings of the two magnetic field sensors (3a, 3b) is larger than the number of windings of the two field coils (1a, 1b).

**Patentansprüche**

1. Verfahren zur kalibrierungsfreien Bestimmung einer Strömungsgeschwindigkeit eines elektrisch leitfähigen Fluids (7),
wobei
jede von zwei Feldspulen (1a, 1b), die in einem Abstand voneinander in dem jeweiligen Fluid (7) angeordnet sind und von dem jeweiligen Fluid (7) elektrisch isoliert sind, gleichzeitig mit einem gepulsten elektrischen Strom von einer Steuereinheit (2) versorgt wird, wobei die zwei gepulsten elektrischen Ströme entgegengesetzt gerichtet sind, so dass
ein primäres Magnetfeld erzeugt wird, das zu entgegengesetzt gerichteten Wirbelströmen führt, die durch das primäre Magnetfeld in dem umgebenden Fluid (7) induziert sind, wodurch ein sekundäres Magnetfeld mit einem Nulldurchgang in dem jeweiligen Fluid (7) erzeugt wird, wobei
das sekundäre Magnetfeld nach den gepulsten elektrischen Strömen durch zwei Magnetfeldsensoren (3a, 3b) gemessen wird, die in einem Abstand voneinander in dem jeweiligen Fluid (7) angeordnet sind und von dem jeweiligen Fluid (7) elektrisch isoliert sind, wobei
die Strömungsgeschwindigkeit aus einer gemessenen zeitabhängigen Stärke des sekundären Magnetfeldes und/oder seiner Zeitableitung berechnet wird durch Erfassen einer zeitlichen Entwicklung einer Position des Nulldurchgangs, die proportional zu einer Fluidgeschwindigkeit ist.

2. Verfahren nach Anspruch 1, **dadurch gekennzeichnet, dass** die zwei Magnetfeldsensoren (3a, 3b) zwischen den zwei Feldspulen (1a, 1b) positioniert sind.

3. Verfahren nach Anspruch 2, **dadurch gekennzeichnet, dass** die Magnetfeldsensoren (3a, 3b) zwischen den zwei Feldspulen (1a, 1b) symmetrisch positioniert werden.

4. Verfahren nach einem der vorangehenden Ansprüche, **dadurch gekennzeichnet, dass** zumindest einer der Magnetfeldsensoren (3a, 3b) als ein Hallsensor, als Flux-Gate-Sensor oder als eine Empfängerspule ausgebildet ist.

5. Verfahren nach einem der vorangehenden Ansprüche, **dadurch gekennzeichnet, dass** die Magnetfeldsensoren (3a, 3b) als Empfängerspulen ausgebildet sind und das sekundäre Magnetfeld bestimmt ist durch Integration der Zeitableitung, die aus der in den genannten Empfängerspulen induzierten elektrischen Spannung berechnet wird.

6. Verfahren nach einem der vorangehenden Ansprüche, **dadurch gekennzeichnet, dass** ein Abstandsvektor zwischen Mittelpunkten der zwei Feldspulen (1a, 1b) in einem Winkel zu einer Strömungsrichtung des jeweiligen Fluids (7) orientiert ist, der sich von 90° unterscheidet.

7. Verfahren nach einem der vorangehenden Ansprüche, **dadurch gekennzeichnet, dass** die zwei Magnetfeldsensoren (3a, 3b) orientiert sind, so dass ein Abstandsvektor zwischen ihren Mittelpunkten parallel zum Abstandsvektor zwischen den Mittelpunkten der Feldspulen (1a, 1b) ist.

8. Verfahren nach einem der vorangehenden Ansprüche, **dadurch gekennzeichnet, dass** die Mittelpunkte der zwei Feldspulen (1a, 1b) und der zwei Magnetfeldsensoren (3a, 3b) entlang einer einzigen Geraden positioniert sind.

9. Verfahren nach einem der vorangehenden Ansprüche, **dadurch gekennzeichnet, dass** die zwei gepulsten elektrischen Ströme eine identische Amplitude aufweisen.

10. Verfahren nach einem der vorangehenden Ansprüche, **dadurch gekennzeichnet, dass** das Fluid (7) geschmolzenes Metall oder Halbleiterschmelze enthält.

11. System zur kalibrierungsfreien Bestimmung einer Strömungsgeschwindigkeit eines elektrisch leitfähigen Fluids (7) mit zwei Feldspulen (1a, 1b), einer Ummantelung (6), zwei Feldsensoren (3a, 3b), einer Steuereinheit (2) und einer Auswertungseinheit (4),
**dadurch gekennzeichnet, dass**
jede der zwei Feldspulen (1a, 1b), die in einem Abstand voneinander innerhalb der Ummantelung (6) in dem jeweiligen Fluid (7) angeordnet sind und durch die Ummantelung (6) von dem jeweiligen Fluid (7) elektrisch isoliert sind, derart ausgebildet ist, dass nach gleichzeitigem Anlegen eines gepulsten elektrischen Stromes an jede der zwei Feldspulen (1a, 1b) durch die Steuereinheit (2), wobei die zwei gepulsten elektrischen Ströme entgegengesetzt gerichtet sind,
ein primäres Magnetfeld erzeugt wird, das zu entgegengesetzt gerichteten Wirbelströmen führt, die durch das primäre Magnetfeld in dem umgebenden Fluid (7) induziert sind, wodurch ein sekundäres Magnetfeld mit einem Nulldurchgang in dem jeweiligen Fluid (7) erzeugt wird, wobei
die zwei Magnetfeldsensoren (3a, 3b), die in einem Abstand voneinander innerhalb der Ummantelung (6) in dem jeweiligen Fluid (7) angeordnet sind und durch die Ummantelung (6) von dem jeweiligen Fluid (7) elektrisch isoliert sind, eingerichtet sind, das sekundäre Magnetfeld zu messen, und
eine Auswertungseinheit (4) eingerichtet ist, die Strömungsgeschwindigkeit aus einer gemessenen zeitabhängigen Stärke des sekundären Magnetfeldes und/oder seiner Zeitableitung zu berechnen durch Erfassen einer zeitlichen Entwicklung einer Position des Nulldurchgangs, die proportional zu einer Fluidgeschwindigkeit ist.

12. System nach Anspruch 11, **dadurch gekennzeichnet, dass** eine Ausgabeeinheit (5) zum Anzeigen der bestimmten Strömungsgeschwindigkeit vorhanden ist.

**13.** System nach einem der Ansprüche 11-12, **dadurch gekennzeichnet, dass** jede der Feldspulen (1a, 1b) eine identische Anzahl von Wicklungen hat.

**14.** System nach einem der Ansprüche 11-13, **dadurch gekennzeichnet, dass** die Magnetfeldsensoren (3a, 3b) Empfängerspulen sind, wobei jede der Empfängerspulen eine identische Anzahl von Wicklungen hat.

**15.** System nach Anspruch 13, **dadurch gekennzeichnet, dass** eine Anzahl von Wicklungen der zwei Magnetfeldsensoren (3a, 3b) größer ist als die Anzahl von Wicklungen der zwei Feldspulen (1a, 1b).

**Revendications**

**1.** Procédé de détermination sans étalonnage d'une vitesse d'écoulement d'un fluide électroconducteur (7), dans lequel

chacune de deux bobines de champ (1a, 1b), qui sont positionnées à distance l'une de l'autre dans le fluide (7) respectif et isolées électriquement du fluide (7) respectif, est alimentée simultanément avec un courant électrique pulsé par une unité de commande (2), dans lequel les deux courants électriques pulsés sont de sens opposés, de sorte que

un champ magnétique primaire est créé, engendrant des courants de Foucault de sens opposés induits par le champ magnétique primaire dans le fluide environnant (7), créant ainsi un champ magnétique secondaire avec un passage par zéro dans le fluide (7) respectif, dans lequel

le champ magnétique secondaire est mesuré après les courants électriques pulsés par deux capteurs de champ magnétique (3a, 3b), qui sont positionnés à distance l'un de l'autre dans le fluide (7) respectif et isolés électriquement du fluide (7) respectif, dans lequel

la vitesse d'écoulement est calculée à partir d'une intensité mesurée dépendant du temps du champ magnétique secondaire et/ou de sa dérivée temporelle en détectant une évolution temporelle d'une position du passage par zéro qui est proportionnelle à une vitesse de fluide.

**2.** Procédé selon la revendication 1, **caractérisé en ce que** les deux capteurs de champ magnétique (3a, 3b) sont positionnés entre les deux bobines de champ (1a, 1b).

**3.** Procédé selon la revendication 2, **caractérisé en ce que** les capteurs de champ magnétique (3a, 3b) sont positionnés de manière symétrique entre les deux bobines de champ (1a, 1b).

**4.** Procédé selon l'une quelconque des revendications précédentes, **caractérisé en ce qu'**au moins un des capteurs de champ magnétique (3a, 3b) est sous la forme d'un capteur à effet Hall, d'un capteur de sonde magnétométrique ou d'une bobine réceptrice.

**5.** Procédé selon l'une quelconque des revendications précédentes, **caractérisé en ce que** les capteurs de champ magnétique (3a, 3b) sont sous la forme de bobines réceptrices et le champ magnétique secondaire est déterminé par une intégration de la dérivée temporelle calculée à partir de la tension électrique induite dans lesdites bobines réceptrices.

**6.** Procédé selon l'une quelconque des revendications précédentes, **caractérisé en ce qu'**un vecteur de distance entre des points centraux des deux bobines de champ (1a, 1b) est orienté à un angle vers une direction d'écoulement du fluide (7) respectif qui est différent de 90°.

**7.** Procédé selon l'une quelconque des revendications précédentes, **caractérisé en ce que** les deux capteurs de champ magnétique (3a, 3b) sont orientés de sorte qu'un vecteur de distance entre leurs points centraux est parallèle au vecteur de distance entre les points centraux des bobines de champ (1a, 1b).

**8.** Procédé selon l'une quelconque des revendications précédentes, **caractérisé en ce que** les points centraux des deux bobines de champ (1a, 1b) et des deux capteurs de champ magnétique (3a, 3b) sont positionnés le long d'une seule ligne droite.

**9.** Procédé selon l'une quelconque des revendications précédentes, **caractérisé en ce que** les deux courants électriques pulsés ont une amplitude identique.

**EP 3 538 901 B1**

**10.** Procédé selon l'une quelconque des revendications précédentes, **caractérisé en ce que** le fluide (7) comprend du métal fondu ou une masse fondue semi-conductrice.

**11.** Système de détermination sans étalonnage d'une vitesse d'écoulement d'un fluide électroconducteur (7) avec deux bobines de champ (1a, 1b), une gaine (6), deux capteurs de champ (3a, 3b), une unité de commande (2) et une unité d'évaluation (4),
**caractérisé en ce que**
chacune de deux bobines de champ (1a, 1b), qui sont positionnées à une certaine distance l'une de l'autre à l'intérieur de la gaine (6) dans le fluide (7) respectif et isolées électriquement du fluide (7) respectif par la gaine (6), est construite de telle manière qu'après application simultanée d'un courant électrique pulsé à chacune des deux bobines de champ (1a, 1b) par l'unité de commande (2), dans lequel les deux courants électriques pulsés sont de sens opposés,
un champ magnétique primaire est créé, engendrant des courants de Foucault de sens opposés induits par le champ magnétique primaire dans le fluide (7) environnant, créant ainsi un champ magnétique secondaire avec un passage par zéro dans le fluide (7) respectif, dans lequel
les deux capteurs de champ magnétique (3a, 3b) qui sont positionnés à une certaine distance l'un de l'autre à l'intérieur de la gaine (6) dans le fluide (7) respectif et isolés électriquement du fluide (7) respectif par la gaine (6), sont configurés pour mesurer le champ magnétique secondaire, et
une unité d'évaluation (4) est configurée pour calculer la vitesse d'écoulement à partir d'une intensité mesurée dépendant du temps du champ magnétique secondaire et/ou de sa dérivée temporelle en détectant une évolution temporelle d'une position du passage par zéro qui est proportionnelle à une vitesse de fluide.

**12.** Système selon la revendication 11, **caractérisé en ce qu'**une unité de sortie (5) destinée à afficher la vitesse d'écoulement déterminée est présente.

**13.** Système selon l'une quelconque des revendications 11 et 12, **caractérisé en ce que** chacune des bobines de champ (1a, 1b) a un nombre identique d'enroulements.

**14.** Système selon l'une quelconque des revendications 11 à 13, **caractérisé en ce que** les capteurs de champ magnétique (3a, 3b) sont des bobines réceptrices, dans lequel chacune des bobines réceptrices a un nombre identique d'enroulements.

**15.** Système selon la revendication 13, **caractérisé en ce qu'**un nombre d'enroulements des deux capteurs de champ magnétique (3a, 3b) est supérieur au nombre d'enroulements des deux bobines de champ (1a, 1b).

Fig. 1

Fig. 2

Fig. 3

Fig. 4

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0058695 A1
- EP 1285277 B1

- US 2435043 A

**Non-patent literature cited in the description**

- **STEFANI, F. ; GERBETH, G.** Contactless inductive flow tomography. *Physical Review E,* 2004, vol. 70, 056306

- **FORBIGER, J. ; STEFANI, F.** Transient eddy current flow metering. *Measurement Science and Technology,* 2015, vol. 26